# EUROPÄISCHE PATENTSCHRIFT

(11) **EP 0 372 293 B1**
(45) Veröffentlichungstag und Bekanntmachung des Hinweises auf die Patenterteilung: **23.02.1994**
(21) Anmeldenummer: 89121509.7
(22) Anmeldetag: 21.11.1989
(51) Int. Cl.: F24D 17/00, F24D 19/10, C02F 1/02

(54) **Brauchwasser-Erwärmungsanlage mit Vorrichtung zur Abtötung der Legionella pneumophila**
Sanitary hot water installation with a device for killing Legionnella pneumophila
Installation de chauffage d'eau chaude sanitaire avec appareillage pour détruire la legionnella pneumophila

(30) Priorität: 01.12.1988 DE 3840516
(43) Veröffentlichungstag der Anmeldung: 13.06.1990
(73) Patentinhaber: Dünnleder, Werner, Dipl.-Ing., D-22850 Norderstedt (DE)
(72) Erfinder: Dünnleder, Werner, Dipl.-Ing., D-22850 Norderstedt (DE)
(74) Vertreter: Eichelbaum, Lambert, Dipl.-Ing.

(56) Entgegenhaltungen:
- EP-A- 0 183 968
- EP-A- 0 270 993
- DE-A- 2 541 601
- DE-A- 3 525 990
- GB-A- 2 099 559
- "Sanitär- und Heizungstechnik" 53 (1988), S. 17 - 32
- "gwf-wasser/abwasser" 120 (1979) H. 2, S. 76 - 79

## Beschreibung

Die Erfindung betrifft eine Anlage zum Erwärmen von Brauchwasser und zum Abtöten von Legionellen in diesem Brauchwasser bestehend aus einer Kaltwasser-Zuleitung, einem Wassererwärmer, einem Brauchwasser-Speicher, einer Zulaufleitung zu diesem und einer Brauchwasser-Verteilungsleitung mit Zapfstellen.

Brauchwasser-Erwärmungsanlagen dieser oder ähnlicher Art für große Gebäude, wie Krankenhäuser, Hotels, Kranken- und Pflegeheime sowie Bürohäuser sind seit langem in vielfältiger Art bekannt. Auf die Ausführungen auf den Seiten 1380 bis 1384 "Taschenbuch für Heizung und Klimatechnik" Recknagel/Sprenger 64. Auflage 1987 wird verwiesen. Sämtliche dieser Systeme erfüllen ihren Zweck, indem sie aus den Zapfstellen die Entnahme von Brauchwasser mit einer Temperatur bis zu etwa 50 °C gestatten. Durch Zumischung von Kaltwasser kann mit unterschiedlich gestalteten Ventilen die an der Zapfstelle gewünschte Wassertemperatur eingestellt werden. Sämtliche Systeme der eingangs genannten Gattung sind dadurch gekennzeichnet, daß das im Speicher enthaltene Wasser zur Vermeidung bzw. Verringerung von Verkalkungen etwa eine maximale Temperatur von 60 °C, möglichst jedoch darunter aufweist. Aus dem Brauchwasser-Speicher wird dieses Wasser über eine Verbindungsleitung zu einer zentralen Brauchwasser-Verteilungsleitung gepumpt, an der die unterschiedlichen Zapfstellen angeschlossen sind. Zwischen den Zapfstellen und dem Speicher ist häufig zur Sicherstellung eines an den Zapfstellen unmittelbar anstehenden Warmwassers eine Zirkulationsleitung geschaltet.

Diese Brauchwasser-Erwärmungsanlagen wurden seit der Entdeckung der Veteranen- bzw. Legionärskrankheit in Frage gestellt, die zum ersten Mal 1976 in einem Hotel in Philadelphia, USA, festgestellt wurde. Dort fand eine Reunion ehemaliger Kriegsveteranen des 1. Weltkrieges statt. Von 4000 Teilnehmern erkrankten 182. Davon starben 29. Diesem traurigen Vorfall verdankt diese Krankheit ihren Namen "Legionella pneumophila". Legionellen sind grammnegative Stäbchenbakterien, die nach taxonomischen Kriterien eine eigene Familie (Legionellaceae) mit der Gattung Legionella repräsentieren. Es gibt hier die Spezies Legionella pneumophila mit 11 Serogruppen und 21 weiteren Spezies. Die Entdeckung weiterer Legionella Spezies und - Serogruppen ist zu erwarten.

Aus inzwischen umfangreichen Untersuchungen (s. "Legionellen" Beiträge zur Bewertung eines hygienischen Problems von Seidel, Seeber und Hässelbach Gustav Fischer Verlag, Stuttgart/New York 1987 Seite 67 bis 71) weiß man, daß Wassertemperaturen von 35 °C bis 40 °C eine äußerst brisante Vermehrung der Legionellen begünstigen. Dieser Temperaturbereich ist häufig in Brauchwasser-Verteilungsleitungen, Zirkulationsleitungen, in Brauseköpfen etc. anzutreffen. Zur Bekämpfung der Legionellen wurden im wesentlichen bisher folgende Umrüstungen der Brauchwasser-Erwärmungsanlagen vorgeschlagen:

Eine thermische Desinfektion durch eine stufenweise Einstellung der Temperatur in der Brauchwasser-Verteilungsleitung auf 70 °C. Sodann werden mit dem Kellergeschoß des betreffenden Gebäudes beginnend systematisch nacheinander sämtliche Zapfstellen in dem Gebäude geöffnet, bis die Maximaltemperatur zwischen 65 °C und 70 °C erreicht worden ist. Alle Zapfstellen werden nach dieser Spülung wieder geschlossen.

Auch weitere thermische Desinfektionen beruhen auf einer Anhebung der Ablauftemperaturen auf 63 °C bis 70 °C. All diese Brauchwasser-Erwärmungsanlagen sowie die mit ihnen durchgeführten thermischen Desinfektionen erfordern einen erheblichen Mehrbedarf an Energie in Form der Zirkulations- und Ausströmungsverluste. Ferner sind sie mit einer erhöhten Korrosionsgefahr, einer vergrößerten Härteausfällung in der Brauchwasser-Verteilungsleitung, einem Verbrühungsrisiko sowie einer vermehrten Wartung für Armaturen und Anlagenteilen behaftet. Darüber hinaus berücksichtigen diese Vorschläge nicht die unabdingbaren Forderungen aus dem Energie-Einsparungsgesetz sowie die Notwendigkeiten auch der zukünftig verstärkten Nutzung von Wärme aus Wärmerückgewinnung, alternativen Energien sowie Wärmepumpentechnologien.

Neben den vorgenannten Brauchwasser-Erwärmungsanlagen mit thermischer Desinfektion sind auch solche mit chemischer Desinfektion bekannt. Zu diesem Zweck wurde die Kaltwasserzuführung zu dem Wassererwärmer mit einer umschaltbaren Umgehungsleitung mit einem Anschluß für zwei Dosierpumpen geschaffen. Dosiert wird mit Natriumhypochlorit und Salzsäure zur pH-Regulierung. Während der chemischen Desinfektion werden alle Warmwasserzapfstellen auf einen Auslauf einer bestimmten Auslaufmenge pro Minute einreguliert, die Chlorgehalte trimetisch mit einem Indikator und die pH-Werte elektrometrisch gemessen. Diese Art der chemischen Desinfektion mit Natriumhypochlorit (Chlorbleichlauge) ist zwar im Bereich kleinerer Schwimmbecken erprobt und bewährt, hingegen in Brauchwasser-Verteilungsleitungen äußerst gefährlich, weil eine Vermischung mit Säuren zur sofortigen Bildung von Chlorgas führt. Daher lassen die bestehenden Vorschriften zur Trinkwasserversorgung nur einen geringen Chlorgehalt im Trinkwasser zum Schutz der Verbraucher zu. Und schließlich ist seine Anwendung in einer Brauchwasser-Verteilungsleitung wegen der damit beträchtlich gesteigerten Korrosionsgefahr und der Leckagen als Folgeschäden sowie eventuell damit verbundener allergischer Hautreaktionen aufgrund von gelösten Kupfer-Nickelionen nicht zu verantworten.

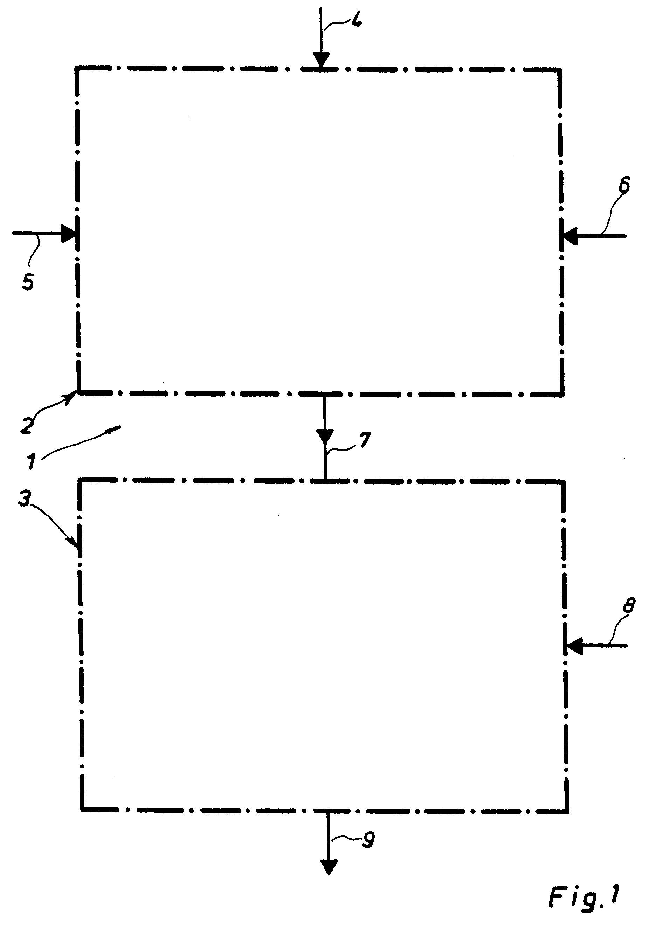

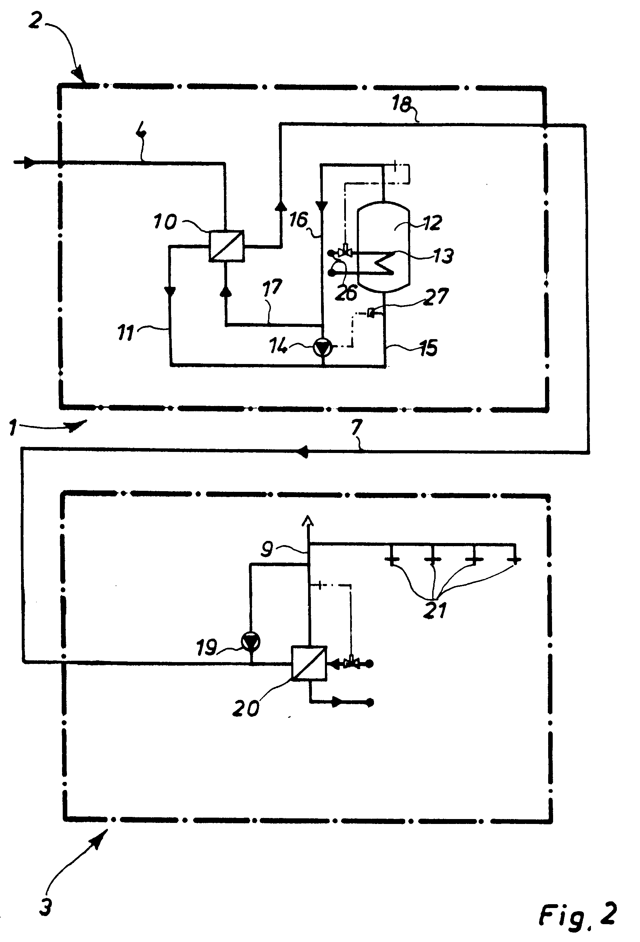

In den Figuren 1 und 2 der GB 2 099 559 A ist eine Anlage der eingangs genannten Art offenbart, bei welcher die Zulaufleitung des Brauchwasser-Speichers mit einem Wärmeübertrager als Rückkühler verbunden ist. Bei dieser Anlage steht die Brauchwasser-Verteilungsleitung mit den Zapfstellen stets entweder in direkter hydromechanischer und/oder thermischer Verbindung mit dem Brauchwasser-Speicher und dem Wassererwärmer. Aufgrund der Wasserentnahmen und infolge von Abkühlungsprozessen in der Brauchwasser-Verteilungsleitung entstehen an den Abzweigungen und damit innerhalb des Brauchwasser-Speichers undefinierte Mischtemperaturen, die eine konstante Temperatur oder gar eine konstante Desinfektionstemperatur der Legionellen in diesem Kreislauf nicht zulassen, da der Brauchwasser-Erzeugerkreis stets direkt mit dem Verteilerkreis gemäß Fig.1 thermisch und gemäß Fig.2 thermisch und hydromechanisch gekoppelt ist. Dadurch können sich die in der heißen Vorlaufleitung des Brauchwasser-Speichers noch nicht abgetöteten Legionellen in der Brauchwasser-Verteilungsleitung bei den dort vorhandenen Temperaturen von unter 43 °C (s. Spalte 2, Zeile 9) wieder rasch vermehren. Eine Ladepumpe fehlt in dieser Anlage. Dadurch kann eine sichere und konstante Abtötungstemperatur der Legionellen innerhalb des gesamten Brauchwasser-Speichers nicht gewährleistet werden. Im unteren Bereich des Speichers liegen die Temperaturen zwischen der Kaltwassertemperatur und der Temperatur des Zirkulationswassers aus dem Verteilersystem (letztere liegt ca. 5 °C bis 10 °C unterhalb der Verteilungstemperatur).

In der EP-0 183 968 A2 ist ein Wasserkreislauf offenbart, der aus einem offenen Vorratsbehälter, einer Pumpe und einem Wärmeübertrager zur Erhitzung eines bereits vorgereinigten und durch UV-Strahlen sterilisierten Wassers auf ca. 60 °C bis 90 °C, aus einem Bakterienfilter zur Herausfilterung toter Bakterien und einem Kühler besteht, die in Reihe hintereinander geschaltet sind. Bei dieser Vorrichtung gelangt durch UV-Strahlen bereits vorbehandeltes Wasser in den offenkundig offenen Tank, infolgedessen es sich hierbei um einen offenen Kreislauf handelt, der nicht einer gattungsgemäßen Anlage entspricht. Durch die offene Schaltung dieses Kreislaufes müssen die Pumpe und der Erhitzer so groß ausgelegt werden, daß sie auch Spitzenentnahmebelastungen abdecken können. Durch die hierzu erforderliche Überdimensionierung wird ein solcher Wasserkreislauf zum Erwärmen von Brauchwasser und zum Abtöten von Legionellen energiewirtschaftlich völlig indiskutabel und kann daher allenfalls in kleinen Drugstores Anwendung finden.

In der DE-A 25 41 601 wird eine Boiler-Speicher-Kombination offenbart, in welcher Wasser hoch erhitzt und bei Entnahme eine angemessene Teilmenge über einen Wärmeübertrager in den Vorratsbehälter geleitet wird. Dieser Wärmeübertrager wird gleichzeitig von dem dem Boiler-Speicher zufließenden Leitungswasser durchflossen, wodurch dieses vorgewärmt wird. Aus dem Vorratsbehälter wird das so pasteurisierte Wasser durch einen Zapfhahn entnommen, wobei ein Ventil einen Unterdruck in dem geschlossenen System unterbinden soll. Um ein Eindringen von Luft und damit von erneuten Bakterien in den Boiler auszuschließen, wird zum Druckausgleich in das Ventil nur solche Luft eingelassen, die zuvor durch einen Filter gereinigt und durch eine UV-Strahlungseinrichtung sterilisiert worden ist. Dieser Gegenstand enthält keine Temperaturregelung bei Entnahme und offenbart eine nur unkontrollierte Kühlung durch den Zwischenkühler, wodurch eine Verbrühungsgefahr bei Entnahme an der Zapfstelle gegeben ist. Für den Einbau in eine zentrale unter Druck stehende Trinkwasser-Versorgungsleitung ist diese Einrichtung nicht geeignet, da einerseits keine lokalen Entnahmemengen möglich sind und andererseits eine Anpassung an wechselnde Zapfmengen fehlt.

In der EP 0 270 993 A2 sind in den Fig.1 bis 8 seit Jahrzehnten bekannte Ladespeicher mit periodisch betriebenen Ladepumpen offenbart. Eine gattungsgemäße Anlage befindet sich in dieser Druckschrift nur in Fig.9. Darin ist ein mit einem Wassererwärmer versehener Brauchwasser-Speicher über eine Zirkulationspumpe und eine Zirkulationsleitung direkt mit Zapfstellen verbunden, wobei eine Kaltwasser-Zuführungsleitung einerseits zum Brauchwasser-Speicher und andererseits zu den Zapfstellen führt. Die Zirkulationspumpe sowie der Brauchwasser-Speicher werden periodisch über ein Regelgerät gesteuert. Bei dieser Anlage können keine definierten Temperaturverhältnisse konstant eingehalten werden, da die als Zirkulationspumpe fungierende Ladepumpe ständig eine durch die Zirkulationsverluste teilabgekühlte Wassermenge umwälzt und im Speicher durch unterschiedliche Kaltwasser-Zulauftemperaturen turbulente sowie temperaturinkonstante Mischströme erzeugt werden, die selbst durch einen ständigen - an Stelle des offenbarten periodischen - Ladepumpenbetrieb bei Zapfruhe nicht verhindert werden könnten. Ferner sind Kalkausfällungen im gesamten Verteilerkreis ebenso wie Korrosionen und eine Verbrühungsgefahr unvermeidlich, da das heiße Wasser direkt von der Zirkulationspumpe vor die Zapfstellen gepumpt wird. Damit nimmt hier der Verteilerkreis ständig am Umwälzprozeß der Zirkulationspumpe teil, wodurch bei entsprechenden Abkühlungserscheinungen unterschiedliche Mischtemperaturen und hohe Energieverluste unvermeidlich sind. Schließlich können über die nicht bezeichneten Verbindungsleitungen zwischen der Warmwasser-Zirkulationsleitung und der Kaltwasser-Zuleitung Legionellen herüberwechseln und sich bei Stillstand des periodischen Betriebes explosionsartig in der Warmwasser-Zirkulationsleitung vermehren.

Von diesem Stand der Technik ausgehend, liegt der Erfindung die Aufgabe zugrunde, eine energiewirtschaftliche Brauchwasser-Erwärmungsanlage der eingangs genannten Gattung zu schaffen, die unabhängig von schwankenden Zapfmengen eine hinreichende Temperatur oder Verweilzeit der zur Brauchwasser-Verteilungsleitung gelangenden Warmwassermengen bei möglichst niedriger Abtötungstemperatur der Legionella pneumophila gewährleistet.

Diese Aufgabe wird in Verbindung mit dem eingangs genannten Gattungsbegriff erfindungsgemäß nach einer ersten Alternative dadurch gelöst, daß der Wassererwärmer, der Brauchwasser-Speicher und eine Ladepumpe bei Zapfruhe einen geschlossenen Wasserkreislauf mit relativ hoher Desinfektionstemperatur bilden, wobei die Zulaufleitung des Brauchwasser-Speichers mit einem an sich bekannten Wärmeübertrager als Rückkühler und dieser wiederum über eine einzige Verbindungsleitung mit der Brauchwasser-Verteilungsleitung verbunden ist sowie sämtliche zur Wassererwärmung erforderlichen Teile der Brauchwasser-Erwärmungsanlage thermisch von der Brauchwasser-Verteilungsleitung mit ihren Zapfstellen und eventuellen Zirkulationsleitungen getrennt sind. Dadurch kann das zu erwärmende Brauchwasser innerhalb eines regional begrenzten Raumes der Gesamtanlage desinfiziert werden, bevor es in die Brauchwasser-Verteilungsleitung gelangt. Aufgrund der Verweilzeit sowie der darauf abgestimmten thermischen Desinfektionstemperatur von möglichst kurz unterhalb der Kalkablagerungstemperatur von 60 °C zeichnet sich diese Anlage durch eine äußerst wirtschaftliche Effektivität bei nicht vorhandenem Verbrühungsrisiko sowie nicht erhöhten Wartungskosten für Armaturen und Anlagenteile aus. Wird beispielsweise 57,5 °C warmes Wasser 24 Minuten im erfindungsgemäßen Wasserkreislauf des Wassererwärmers umgewälzt bzw. gespeichert, so sind sämtliche Legionella pneumophila bei einer Absterbegeschwindigkeit in Form des D-Wertes von 6 Minuten abgestorben. Dieser D-Wert gibt die dezimale Reduktionszeit an, bei der die kolonienbildenden Einheiten (KBE) einer Bakterienpopulation um eine Zehnerpotenz reduziert worden ist. Nach 24 Minuten sind bei 57,5 °C ca. 10⁴ KBE/ml abgestorben. Grundsätzlich ist es jedoch auch möglich, die vorbeschriebene Brauchwasser-Erwärmungsanlage innerhalb des bei Zapfruhe geschlossenen Wassererwärmungskreislaufes mit anderen Temperaturen zu fahren. Als besonders vorteilhaft hat es sich herausgestellt, das Brauchwasser im Wasserkreislauf vom Wassererwärmer, Brauchwasser-Speicher und Ladepumpe in zeitlicher und temperaturniveaumäßiger Abhängigkeit von der Absterbegeschwindigkeit der Legionella pneumophila umzuwälzen, bevor es über den Rückkühler in die Brauchwasser-Verteilungsleitung pumpbar ist. Dabei wird vorteilhaft zur Wärmerückgewinnung der Rückkühler von der Kaltwasser-Zuleitung beaufschlagt.

Eine besonders vorteilhafte Weiterbildung der Erfindung wird dadurch erzielt, daß zwischen dem Wassererwärmer und dem Brauchwasser-Speicher ein die Desinfektionstemperatur im Speicher über den erforderlichen Zeitraum für die Absterbegeschwindigkeit der Legionella pneumophila sicherstellender Puffer angeordnet ist. Dabei ist der Puffer entweder als separater Behälter oder als im Brauchwasser-Speicher integrierte Pufferzone ausgebildet. Der Puffer wird vorteilhaft in Abhängigkeit von der konstanten Förderleistung der Ladepumpe derart dimensioniert, daß die Umwälzung der Wassermenge in dem Kreislauf von Ladepumpe, Wassererwarmer, Puffer und Speicher innerhalb eines solchen Zeitraumes und bei einem derartigen Temperaturniveau erfolgt, daß das aus ihm in den Brauchwasser-Speicher gelangende Wasser bezüglich der Legionella pneumophila desinfiziert ist.

Um das aus der Kaltwasser-Zuleitung zum Wassererwärmer strömende Kaltwasser bereits vorwärmen und damit die Brauchwasser-Erwärmungsanlage entsprechend wirtschaftlich günstig betreiben zu können, ist vorteilhaft zwischen dem Wassererwärmer und der Ladepumpe ein zusätzlicher Wärmeübertrager angeordnet, der von einer Leitung eines Fernwärmenetzes, einer Heizungsanlage oder eines mit dem Kondensator einer Wärmepumpe gekoppelten Heizkreises beaufschlagbar ist. Zur Erhaltung der Wärmeübertragungsleistung des Wassererwärmers erweist es sich auch als vorteilhaft, zwischen ihm und der Ladepumpe eine Enthärtungsvorrichtung vorzusehen.

In besonders vorteilhafter Weiterbildung der Erfindung ist der Wassererwärmer mit mindestens zwei getrennten Heizschlangen versehen, die an ihrer Außenseite von demselben Heizmedium innerhalb des Wassererwärmers beaufschlagbar sind. Dadurch erhält der Wassererwärmer zwei getrennte Ein- und Austrittsleitungen, so daß zur Entkalkung der einen Heizschlange die jeweils andere weiterhin zur Wassererwärmung genutzt werden kann. Dabei verändert sich lediglich die Ladezeit des Speichers, nicht jedoch das Temperaturniveau der zu ladenden Warmwassermenge, wobei der Speicher zur Entkalkung jeweils einer Heizschlange nicht außer Betrieb gesetzt zu werden braucht.

Es versteht sich, daß in einem Wassererwärmer auch mehr als nur zwei Heizschlangen angeordnet werden können. Dabei kann jede Heizschlange entweder je einer getrennten oder sämtliche Heizschlangen einer gemeinsamen Ladepumpe zugeordnet sein.

Nach einer zweiten Alternative wird die der Erfindung zugrundeliegende Aufgabe in Verbindung mit dem eingangs genannten Gattungsbegriff dadurch gelöst, daß der Wassererwärmer, der Brauchwasser-Speicher und eine Ladepumpe bei Zapfruhe einen geschlossenen Wasserkreislauf für Brauchwasser bei Zapftemperatur bilden, wobei zwischen der Ladepumpe und dem Wassererwärmer ein Injektor einer Ozon-Zufuhreinrichtung, ein Reaktionsbehälter und ein Aktivkohlefilter hintereinander angeordnet sind und nur eine einzige Vorlaufleitung des Brauchwasser-Speichers mit der Verteilungsleitung verbunden ist. Dadurch wird das in den Speicher gelangende Wasser durch Ozonierung desinfiziert und der Ozon-Überschuß durch den Aktivkohlefilter ausgefiltert, bevor das so desinfizierte Brauchwasser in den Brauchwasser-Speicher und von dort in die Verteilungsleitung gelangt.

Dabei sind vorteilhaft vor dem Injektor der Ozon-Zufuhreinrichtung eine Treibwasserpumpe und zwischen dieser und der Ladepumpe einerseits und dem Reaktionsbehälter andererseits eine Bypassleitung angeordnet.

Nach einer dritten Alternative wird die der Erfindung zugrundeliegende Aufgabe in Verbindung mit dem eingangs genannten Oberbegriff erfindungsgemäß dadurch gelöst, daß der Wassererwärmer, der Brauchwasser-Speicher und eine Ladepumpe bei Zapfruhe einen geschlossenen Wasserkreislauf für Brauchwasser bei Zapftemperatur bilden, wobei vor der Ladepumpe eine Chlordosierungs-Einrichtung und zwischen der Vorlaufleitung des Brauchwasser-Speichers und der Brauchwasser-Verteilungsleitung ein Aktivkohlefilter für die Dechlorierung angeordnet und die Brauchwasser-Verteilungsleitung über nur eine einzige Verbindungsleitung mit dem geschlossenen Wasserkreislauf verbunden ist. Durch diese Anordnung bleibt die desinfizierende Chlormischung, z.B. Natriumhypochlorit (Chlorbleichlauge) auf den Wasserkreislauf der Wassererwärmung beschränkt, wohingegen die Brauchwasser-Verteilungsleitung, die Zapfstellen und eine eventuell angeschlossene Zirkulationsleitung von der stark korrosiven Chlorverbindung freigehalten werden.

Nach einer vierten Alternative wird die der Erfindung zugrundeliegende Aufgabe in Verbindung mit dem eingangs genannten Oberbegriff erfindungsgemäß dadurch gelöst, daß der Wassererwärmer, der Brauchwasser-Speicher und eine Ladepumpe bei Zapfruhe einen geschlossenen Wasserkreislauf für Brauchwasser bei Zapftemperatur bilden, wobei auf der Druckseite der Ladepumpe im Brauchwasser-Erwärmungskreislauf eine UV-Strahlungsvorrichtung angeordnet und dieser Brauchwasser-Erwärmungskreislauf über nur eine einzige Verbindungsleitung mit der Brauchwasser-Verteilungsleitung verbunden ist.

Nach einer fünften Alternative wird die der Erfindung zugrundeliegende Aufgabe dadurch gelöst, daß entweder die vorbeschriebene thermische Desinfizierung mit der vorbeschriebenen Ozon-Zufuhreinrichtung oder mit der vorbeschriebenen Chlordosierungs-Einrichtung oder mit der UV-Strahlungsvorrichtung kombinierbar ist.

Zur Unterstützung der Desinfektionsmaßnahmen im Brauchwasser-Erwärmungskreislauf ist vorteilhaft in die Kaltwasser-Zuleitung eine UV-Strahlungsvorrichtung zur Desinfektion angeordnet, zu der vorteilhaft in der Kaltwasser-Zuleitung ein Pufferbehälter parallel geschaltet ist und über eine Förderpumpe und die UV-Strahlungsvorrichtung bei Zapfruhe zu einem geschlossenen Kreislauf verbunden sind. Für die Übernahme bei Spitzenbedarf kann der Pufferbehälter beispielsweise 60% der gesamten Kaltwassermenge übernehmen, während bei der Anordnung von zwei UV-Strahlungsvorrichtungen mit jeweils zwei Förderpumpen, beispielsweise eine jede ca. 20%, der gesamten Kaltwassermenge in diesem Kaltwasser-Desinfektionskreislauf umwälzen kann.

Weitere vorteilhafte Anordnungs- und Ausgestaltungsmerkmale der Erfindung sind aus den Ansprüchen entnehmbar. Einige Ausführungsbeispiele der Erfindung werden nachfolgend an Hand der Zeichnungen beschrieben. Dabei zeigen:
Fig. 1 eine schematische Darstellung des bei Zapfruhe geschlossenen Brauchwasser-Erwärmungskreislaufes und dessen Trennung von der Brauchwasser-Verteilungsleitung,
Fig. 2 eine Brauchwasser-Erwärmungsanlage mit thermischer Desinfektion und einem Brauchwasser-Speicher mit integriertem Wassererwärmer,
Fig. 3 eine Brauchwasser-Erwärmungsanlage mit thermischer Desinfektion und einem vom Brauchwasser-Speicher getrennten Wassererwärmer,
Fig. 4 eine Weiterbildung der Brauchwasser-Erwärmungsanlage von Fig. 2 oder 3 mit einem zwischen dem Brauchwassererwärmer und dem Brauchwasser-Speicher angeordneten Puffer-Behälter und einem zusätzlichen Brauchwassererwärmer zur Beaufschlagung von Sekundärenergien, wie Fernwärme, Wärmepumpen-Kreisläufe etc.,
Fig. 4a die Brauchwasser-Erwärmungsanlage gemäß Fig. 4, jedoch mit einer Enthärtungsvorrichtung anstelle des zusätzlichen Wärmeübertragers,
Fig. 5 eine Brauchwasser-Erwärmungsanlage mit einer Ozon-Zufuhreinrichtung im Brauchwasser-Erwärmungskreislauf,
Fig. 6 eine Brauchwasser-Erwärmungsanlage mit jeweils einer Chlordosierungs-Einrichtung im Brauchwasser-Erwärmungskreislauf und im Brauchwasser-Verteilerkreis,
Fig. 7 eine Brauchwasser-Erwärmungsanlage mit einer UV-Strahlungsvorrichtung im Brauchwasser-Erwärmungskreislauf,
Fig. 8 ein Brauchwasser-Erwärmungskreislauf mit Pufferbehälter und Speicher sowie ein Wassererwärmer mit zwei Heizschlangen,
Fig. 9 den Brauchwasser-Erwärmungskreislauf von Fig. 8 mit einem zusätzlichen Wassererwärmer zur Beaufschlagung von Sekundärenergie,
Fig. 10 einen Wassererwärmer mit integrierter Pufferzone,
Fig. 11 einen in der Kaltwasser-Zuleitung oder dem Brauchwasser-Erwärmungskreislauf vorgeschalteten Kaltwasser-Kreislauf mit einem Pufferbehälter und zwei dazu parallel geschalteten UV-Strahlungsvorrichtungen.

Gemäß der schematischen Darstellung der Fig. 1 setzt sich die Brauchwasser-Erwärmungsanlage (1) aus einem Brauchwasser-Erwärmungskreislauf (2) und einem Brauchwasser-Verteilerkreis (3) zusammen, die in Fig. 1 sowie in den nachfolgenden Figuren 2 bis 6 jeweils mit dicken strichpunktierten Systemgrenzen gekennzeichnet sind.

Dabei symbolisieren die Pfeile (4) die Kaltwasser-Zuleitung, (5) die Vorwärmung des Kaltwassers, (6) die Desinfektion des erwärmten Brauchwassers durch Übertemperatur, Ozonieren, Chlorieren oder UV-Strahlung und (7) die Verbindungsleitung zwischen der Vorlaufleitung zwischen dem Brauchwasser-Erwärmungskreislauf (2) und dem Brauchwasser-Verteilerkreis (3).

Im Brauchwasser-Verteilerkreis (3) symbolisieren der Pfeil (8) die Erwärmung des Brauchwassers auf Betriebstemperatur zum Ausgleich der Zirkulationsverluste und der Temperaturschwankungen aus der Verbindungsleitung (7) und der Pfeil (9) die Brauchwasser-Verteilungsleitung zu den Zapf- bzw. Entnahmestellen (21).

Dieses Prinzipschema ist bei den nachfolgend beschriebenen Ausführungsformen der Figuren 2 bis 7 wie folgt verwirklicht, wobei die Wasserleitungen (4, 7, 9), der Brauchwasser-Erwärmungskreislauf (2), der Brauchwasser-Verteilerkreis (3) sowie die gesamte Brauchwasser-Erwärmungsanlage (1) jeweils mit gleichen Bezugsziffern versehen sind:

Gemäß Fig. 2 gelangt über die Kaltwasser-Zuleitung (4) das zu erwärmende Wasser über den Rückkühler (10), die Leitung (11) in den Speicher (12), in dem der Wassererwärmer (13) integriert ist. Bei Zapfruhe wird über die Ladepumpe (14) das am Rückkühler (10) vorgewärmte Kaltwasser in dem Kreislauf (15, 12, 16, 14) bei der jeweiligen Desinfektionstemperatur, z.B. zwischen 57,5 °C und 70 °C, umgewälzt. Beim Zapfen gelangt das so erhitzte Wasser aus dem Speicher (12) über die Leitung (16) und (17) zum Rückkühler (10), in dem es auf Zapftemperatur von z.B. 40 °C bis 50 °C heruntergekühlt wird. Die vom Brauchwasser an den Rückkühler (10) abgegebene Enthalpie wird auf das über die Kaltwasser-Zuleitung (4) herangeführte Kaltwasser mit einer Temperatur von 10 °C bis 15 °C übertragen, wodurch es beispielsweise auf 30 °C bis 40 °C in der Leitung (11) vorerwärmt wird. Das am Rückkühler (10) auf ca. 40 °C bis 50 °C heruntergekühlte sowie thermisch desinfizierte Wasser gelangt sodann über die Leitung (18) und die Verbindungsleitung (7) zum Brauchwasser-Verteilerkreis (3), der sich im wesentlichen aus der Brauchwasser-Verteilungsleitung (9), einer Zirkulationspumpe (19), einem Nachwärmer (20) zum Ausgleich der Zirkulationsverluste sowie aus mehreren Zapfstellen (21) zusammensetzt.

In dieser sowie in den nachfolgend noch zu beschreibenden Figuren geben die Pfeile ohne nähere Bezeichnung die Strömungsrichtung des jeweiligen Fluides an. In sämtlichen Figuren 2 bis 7 sind der Übersicht halber die erforderlichen Ventile, Schieber, Regelgeräte etc., die nicht Gegenstand der Erfindung sind, fortgelassen worden.

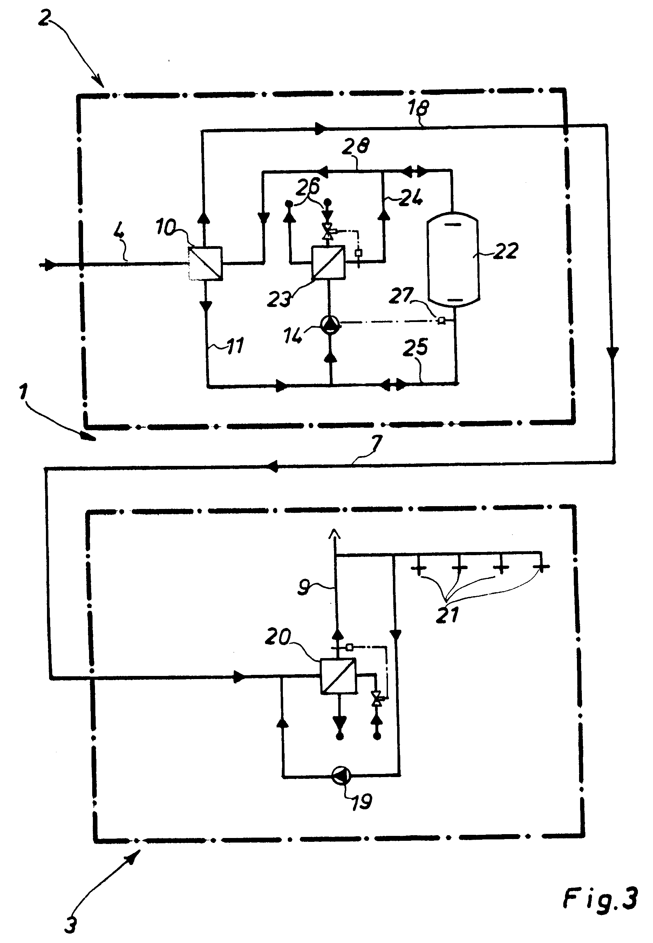

In Fig. 3 ist der Speicher (22) vom Wassererwärmer (23) getrennt. Im Wasser-Erwärmungskreislauf (2) gelangt über die Kaltwasser-Zuleitung (4) das zu erwärmende Brauchwasser mit einer Temperatur von 10 °C bis 15 °C zu dem als Vorwämer wirkenden Rückkühler (10), den es über die Leitung (11) mit einer Temperatur von z.B. 30 °C bis 40 °C verläßt und wird von der Ladepumpe (14) in den Wassererwärmer (23) gedrückt. Aus diesem gelangt es über die Leitung (24) in den Speicher (22). Auch hier bilden der Speicher (22), die Leitung (25), die Ladepumpe (14), der Wassererwärmer (23) und die Leitung (24) bei Zapfruhe einen geschlossenen Kreislauf, in dem das Brauchwasser bei einer Desinfektionstemperatur von z.B. 65 °C umgewälzt wird. Die Wärmezufuhr zum Wassererwärmer (23) erfolgt wie beim Ausführungsbeispiel der Fig. 2 über die Zuleitungen (26). Die Ladepumpe (14) kann jeweils über einen Thermostaten (27) ein- und ausgeschaltet werden.

Sobald an den Zapfstellen (21) gezapft wird, gelangt aus dem Speicher (22) über die Leitung (25), die Ladepumpe (14), die Leitung (28) und den Rückkühler (10) auf ca. 38 °C bis 50 °C heruntergekühltes Brauchwasser in die Leitung (18) sowie über die Verbindungsleitung (7) zu den Zapfstellen (21) der Brauchwasser-Verteilungsleitung (9). Eine dementsprechende Menge Kaltwasser strömt über die Kaltwasser-Zuleitung (4) in den Wassererwärmungs-Kreislauf (2) nach.

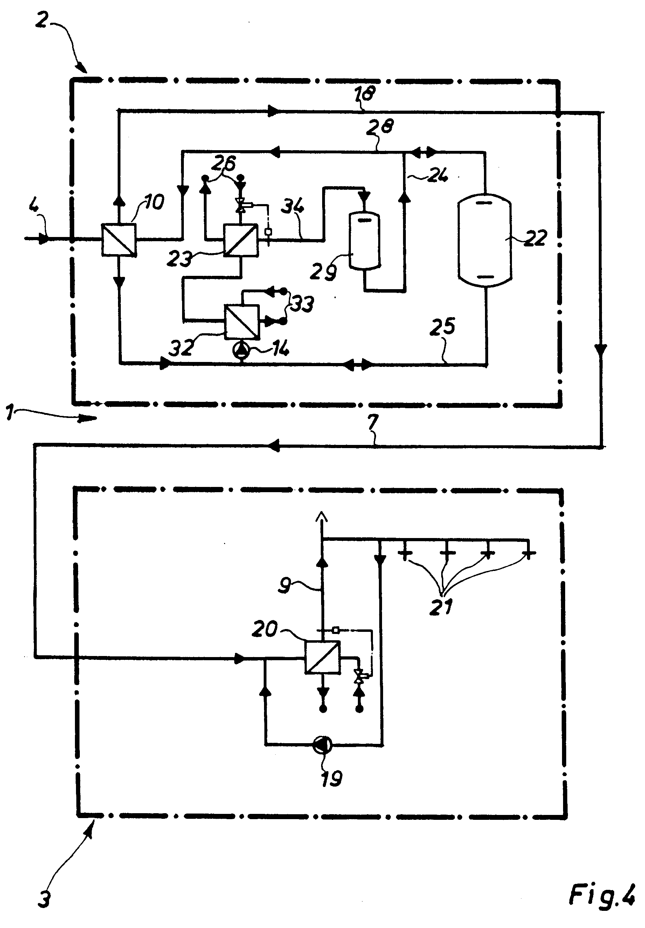

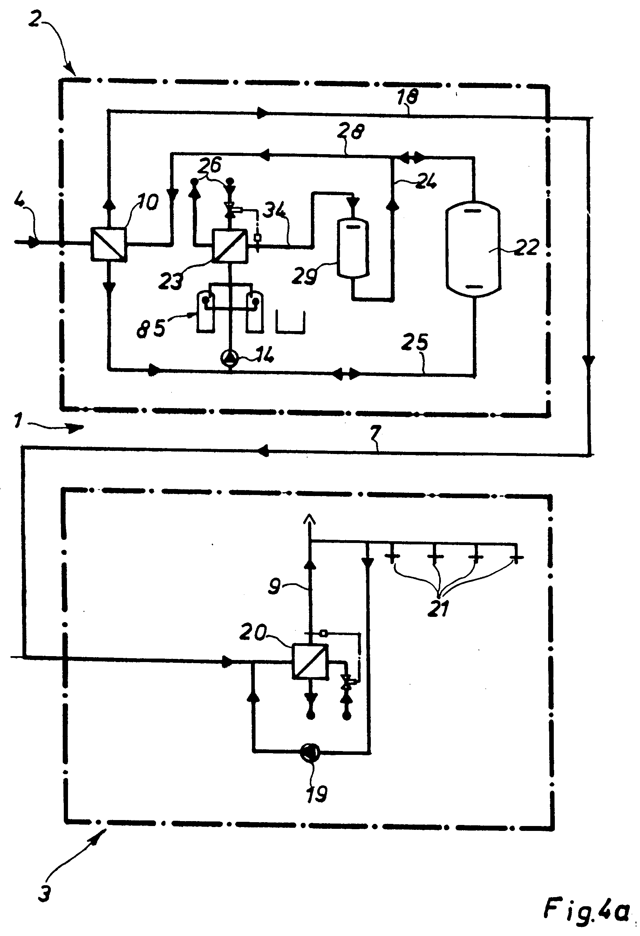

Im Ausführungsbeispiel der Fig. 4 ist zwischen dem Wassererwärmer (23) und dem Brauchwasser-Speicher (22) ein die Desinfektionstemperatur im Speicher (22) über den erforderlichen Zeitraum für die Absterbegeschwindigkeit der Legionella pneumophila sicherstellender Pufferbehälter (29) angeordnet.

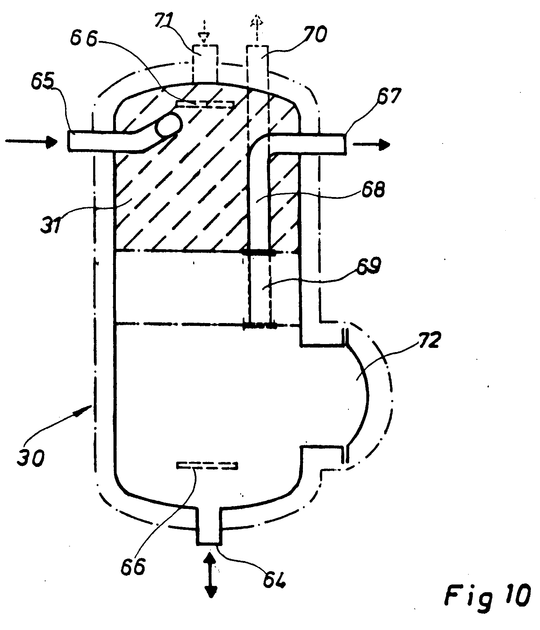

Der Pufferbehälter (29) und der Speicher (22) können jedoch auch gemäß der noch zu beschreibenden Fig. 10 zu einer Behältereinheit (30) mit integrierter Pufferzone (31) vereinigt werden.

Gemäß Fig. 4 ist außerdem zwischen dem Wassererwärmer (23) und der Ladepumpe (14) ein zusätzlicher Wärmeübertrager (32) angeordnet, der über die Zufuhrleitungen (33) von einem Fernwärmenetz, einer Heizungsanlage, einem nichtdargestellten Kondensator einer Wärmepumpe oder einem anderen vergleichbaren Wärmeerzeuger beaufschlagbar ist. Durch diesen zusätzlichen Wärmeübertrager (32) können somit noch Sekundärenergien für die Vorwärmung des über die Kaltwasser-Zuleitung (4) herangeführten Kaltwassers ausgenutzt werden, so daß sich die Erhitzung des Brauchwassers auf Desinfektionstemperatur durch diese externe Rückgewinnung besonders wirtschaftlich gestaltet.

Von der Ladepumpe (14) wird das im Rückkühler (10) vorgewärmte Kaltwasser durch den zusätzlichen Wärmeübertrager (32), den Wassererwärmer (23) und die Leitung (34) in den Puffer (29) gedrückt, von dem es über die Leitung (24) in den Speicher (22) gelangt. Dabei kommt dem Pufferbehälter (29) die Aufgabe zu, das auf eine möglichst niedrige Desinfektionstemperatur, von z.B. 57,5 °C bis 60 °C, erhitzte Brauchwasser mit der zur Desinfektion erforderlichen Zeit in dem Brauchwasser-Erwärmungskreislauf (2) bzw. (14, 32, 23, 34, 29, 24, 22, 25) zu halten, bevor es über die Leitung (28), den Rückkühler (10), die Leitung (18) und die Verbindungsleitung (7) zum Brauchwasser-Verteilerkreis (3) und von dort in der bereits beschriebenen Weise zu den Zapfstellen (21) gelangt. Durch die geringe Desinfektionstemperatur von beispielsweise 57,5 °C und 60 °C können im Brauchwasser-Erwärmungskreislauf (2) die die Wärmeübertragung beeinträchtigenden Kalkablagerungen erheblich verzögert oder gar unterbunden werden, so daß eine regelmäßige Entkalkung auf der Innenseite der Wärmeübertrager (32) und (23) nicht erforderlich ist.

Die Brauchwasser-Erwärmungsanlage (1) gemäß Fig. 4a unterscheidet sich von derjenigen gemäß Fig. 4 durch den Fortfall des zusätzlichen Wärmeübertragers (32), an dessen Stelle hinter der Ladepumpe (14) eine Enthärtungs-Vorrichtung (85) angeordnet ist. Letztere hält den Brauchwasser-Erwärmungskreislauf (2) von Kalkablagerungen frei, die ansonsten die Wärmedurchgangszahl (k) an den Wärmeübertragungsflächen sowie die Querschnitte der Rohrleitungen vermindern.

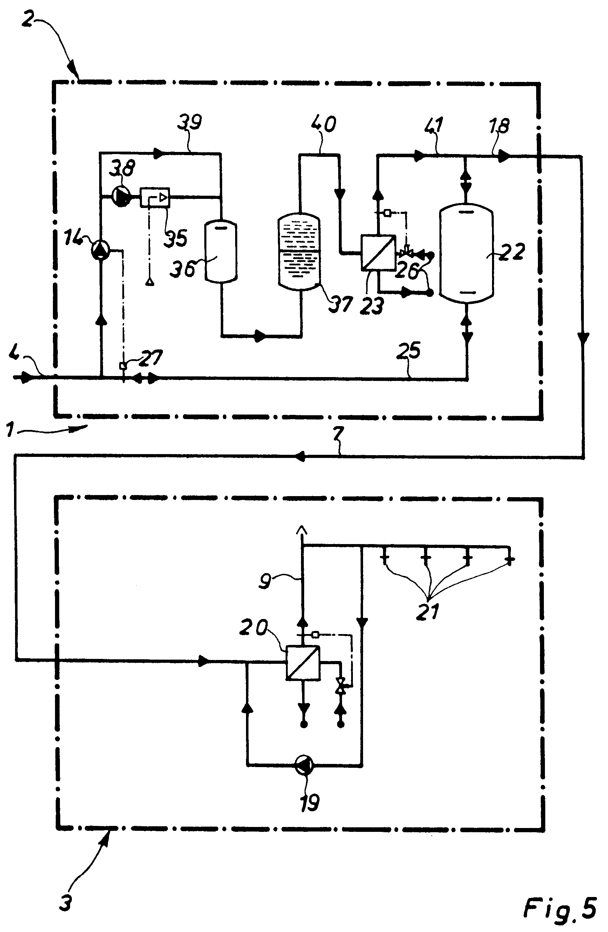

In der Brauchwasser-Erwärmungsanlage (1) gemäß Fig. 5 bilden der Wassererwärmer (23), der Brauchwasser-Speicher (22) und die Ladepumpe (14) bei Zapfruhe einen geschlossenen Wasserkreislauf bei einer Brauchwasser-Temperatur von beispielsweise 50 °C, wobei zwischen der Ladepumpe (14) und dem Wassererwärmer (23) eine Ozon-Zufuhreinrichtung (35), ein Reaktionsbehälter (36) und ein Aktivkohlefilter (37) hintereinander angeordnet sind und die Vorlaufleitung (18) des Brauchwasser-Speichers (22) über die Verbindungsleitung (7) mit der Brauchwasser-Verteilungsleitung (9) verbunden ist. Dadurch kann über die Ladepumpe (14), die Treibwasserpumpe (38) und die Bypassleitung (39) das über die Kaltwasser-Zuleitung (4) herangeführte Kaltwasser in der Ozon-Zufuhreinrichtung (35) desinfiziert, im Behälter (36) reagieren und das Rest-Ozon im Aktivkohlefilter (37) herausgezogen werden, bevor das Kaltwasser über die Leitung (40) in den Wassererwämer (23) und über die Leitung (41) in den Speicher (22) gelangt, aus dem es über die Leitung (25) in dem vorbeschriebenen Kreislauf umgewälzt wird, bevor es bei Zapfung über die Leitung (18) aus dem Wassererwärmungs-Kreislauf (2) abgezogen wird und über die Verbindungsleitung (7) in der bereits vorbeschriebenen Weise über die Brauchwasser-Verteilungsleitung (9) zu den Zapfstellen (21) gelangt.

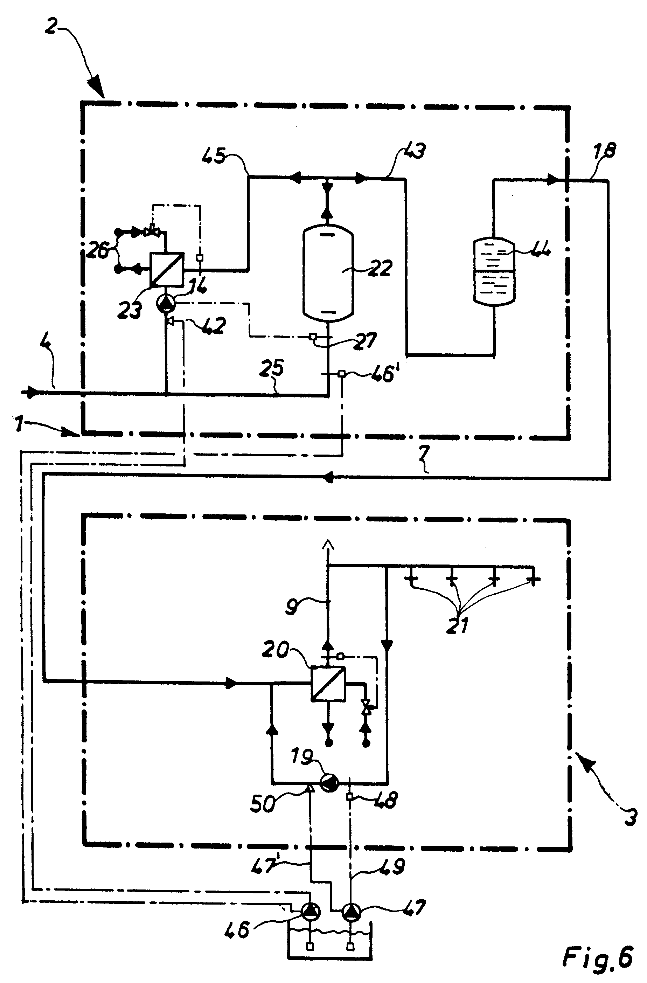

Im Ausführungsbeispiel der Fig. 6 bilden der Wassererwärmer (23), der Brauchwasser-Speicher (22) und die Ladepumpe (14) bei Zapfruhe einen geschlossenen Wasserkreislauf für Brauchwasser bei Zapftemperatur, wobei vor der Ladepumpe (14) eine Chlordosierungs-Einrichtung (42) und zwischen der Vorlaufleitung (43) des Brauchwasser-Speichers (22) und den Leitungen (18, 7) ein Aktivkohlefilter (44) zur Dechlorierung angeordnet sind. Dadurch kann das über die Kaltwasser-Zuleitung (4) herangeführte Wasser durch die Chlordosierungs-Einrichtung (42) mit Natriumhypochlorit (Chlorbleiche) versetzt, sodann im Wassererwärmer (23) auf Zapf- bzw. Speichertemperatur von beispielsweise 50 °C erhitzt und bei Zapfruhe über die Leitung (45), den Speicher (22), die Leitung (25), die Ladepumpe (14) und den Erwärmer (23) umgewälzt werden. Bevor es bei Zapfung über die Leitung (43) den Wassererwärmungskreislauf (2) zur Leitung (18) verläßt, wird im Aktivkohlefilter (44) eine Dechlorierung vorgenommen. Zu der Chlordosierungs-Einrichtung (42) gehört ferner die Chlordosierpumpe (46) und ein diese steuerndes Chlorüberschuß-Meßgerät (46') für den Brauchwasser-Erwärmungskreislauf (2) sowie die Chlordosierpumpe (47) für den Brauchwasser-Verteilerkreis (3), die jedoch lediglich bei der Erstdesinfektion oder bei bewußten Zwischendesinfektionen unter Überwachung der Zapfstellen (21) nur sporadisch in Betrieb zu setzen ist und ansonsten, insbesondere bei Brauchwasser-Zapfung, ausgeschaltet bleibt. Jedoch kann die Chlordosierpumpe (47) auch bei Ausfall der Chlordosierungs-Einrichtung (42) verwendet werden. In diesem Fall befindet sich in Strömungsrichtung vor der Zirkulationspumpe (19) ein Chlorüberschuß-Meßgerät (48), welches über die Regelleitung (49) den Einsatz und das Abschalten der Chlordosierpumpe (47) regelt, so daß die unmittelbar über die Zufuhrleitung (47 ) mit an der Druckseite der Zirkulationspumpe (19) verbundene Chlordosierungs-Einrichtung (50) in und außer Betrieb gesetzt werden kann.

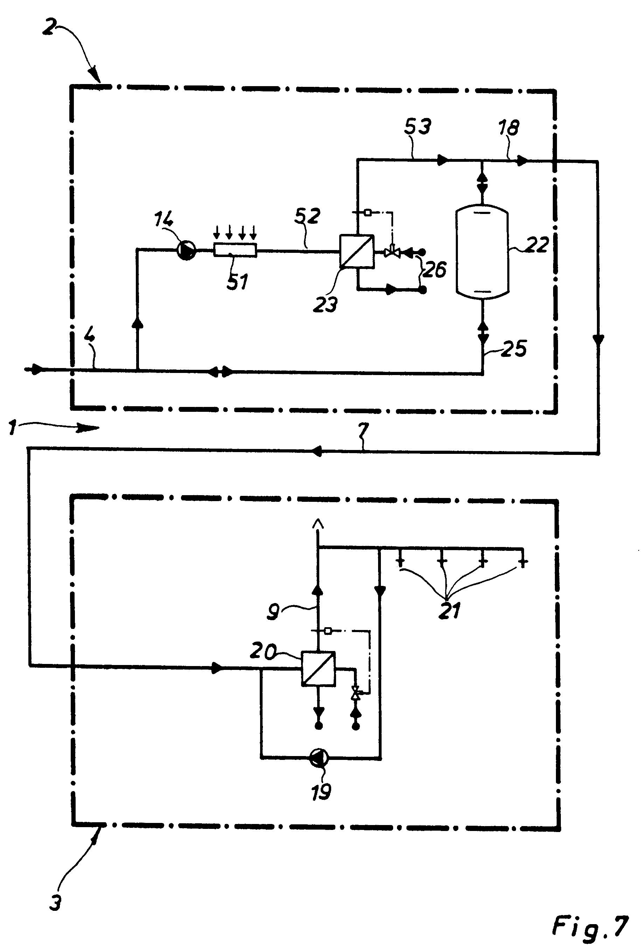

Im Ausführungsbeispiel der Fig. 7 ist zwischen der Kaltwasser-Zuleitung (4) und dem Wassererwärmer (23) eine UV-Strahlungsvorrichtung (51) zur Desinfektion angeordnet. Dadurch wird das aus der Kaltwasser-Zuleitung (4) von der Ladepumpe (14) angesaugte Kaltwasser durch UV-Strahlung desinfiziert, bevor es über die Leitung (52) in den Wassererwärmer (23) und von dort über die Leitung (53) in den Brauchwasser-Speicher (22) gedrückt wird, von dem es über die Leitung (25) in dem vorbeschriebenen Kreislauf bei Zapfruhe umgewälzt wird. Bei Zapfung an den Zapfstellen (21) gelangt das auf Zapftemperatur von z.B. 50 °C erhitzte Brauchwasser aus dem Speicher (22) und die Leitung (18) über die Verbindungsleitung (7) zur Brauchwasser-Verteilungsleitung (9).

Es versteht sich, daß die unterschiedlichen Prinzipien der thermischen, der chemischen (Chlorierung und Ozonierung) und der physikalischen (UV-Bestrahlung) Desinfektion je nach Bedarf miteinander kombiniert werden können.

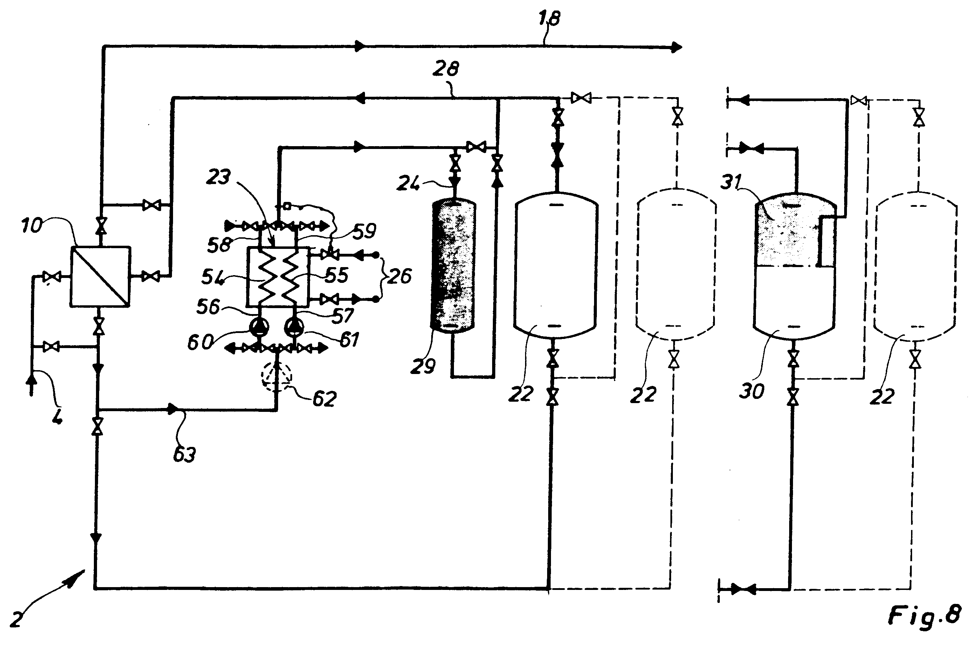

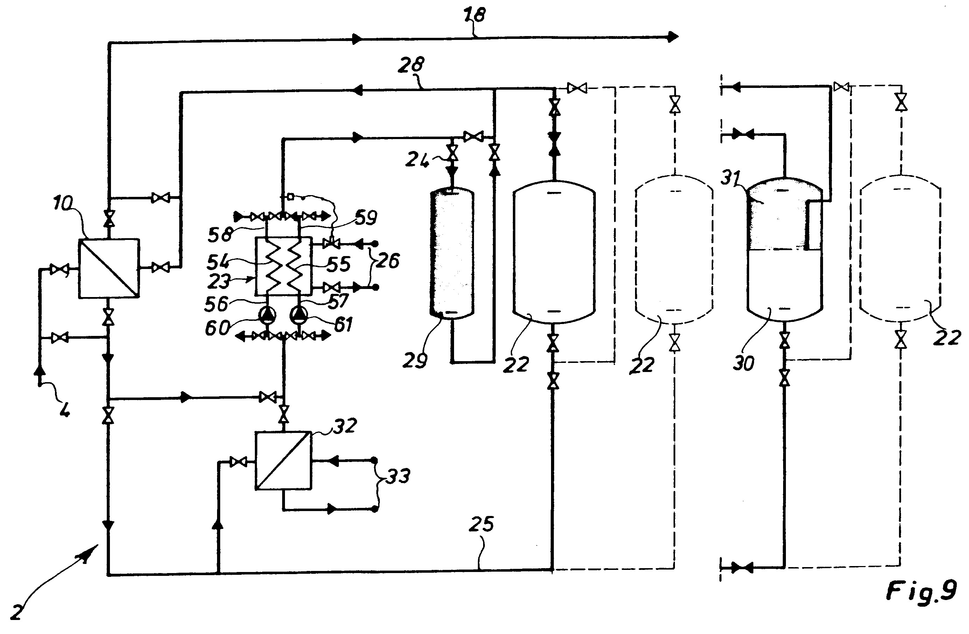

Ein besonders vorteilhafter Wassererwärmer (23) ist in den Figuren 8 und 9 dargestellt. Diese Figuren zeigen den Brauchwasser-Erwärmungskreis (2) zu einer thermischen Desinfektion der im wesentlichen unter Fortfall des zusätzlichen Wärmeübertragers (32) der Anordnung der Fig. 4 entspricht. In beiden Figuren ist der Wassererwärmer (23) mit zwei getrennten Heizschlangen (54, 55) mit jeweils getrennten Eintritten (56, 57) und mit getrennten Austritten (58, 59) versehen. Die Erfindung sieht auch noch die Anordnung weiterer Heizschlangen (54, 55) in ein und demselben Wassererwärmer (23) vor. In Strömungsrichtung ist vor der Heizschlange (54) die Ladepumpe (60) und vor der Heizschlange (55) die Ladepumpe (61) geschaltet. Es ist auch möglich, beide Ladepumpen (60, 61) entfallen zu lassen und durch eine Ladepumpe (62) zu ersetzen, die strichpunktiert in der Leitung (63) der Fig. 8 angedeutet ist. Außerdem sind zum Pufferbehälter (29) parallel zwei Speicher (22) zueinander angeordnet.

In der jeweils rechten Bildhälfte der Figuren 8 und 9 ist der Pufferbehälter (29) und der Speicher (22) der linken Bildhälfte durch den noch zu Fig. 10 zu beschreibenden einheitlichen Behälter (30) mit Pufferzone (31) sowie durch einen zusätzlichen Speicher (22) ersetzt worden.

Durch die Anordnung von mehreren Heizschlangen (54, 55) und einer oder mehreren Ladepumpen (62; 60, 61) kann bei Aufrechterhaltung des Erwärmungsbetriebes durch eine Heizschlange, z.B. durch die (55), die jeweils andere Heizschlange (54) an ihrer Innenseite von Kalkbestandteilen befreit und durchspült werden, ohne daß der Wassererwärmungskreis (2) außer Betrieb gesetzt werden muß. Dabei kann die Ladetemperatur von Speicher (22) und Puffer (29) aufrechterhalten werden, wohingegen sich die Ladezeit verlängert.

Der Brauchwasser-Erwärmungskreis (2) der Fig. 9 unterscheidet sich von dem zuvor beschriebenen der Fig. 8 lediglich dadurch, daß in Strömungsrichtung des Kaltwassers vor dem Wassererwärmer (23) ein zusätzlicher Wassererwärmer (32) gemäß Fig. 4 zur Ausnutzung von Sekundärenergien eines nicht dargestellten Fernwärmenetzes, einer Heizungsanlage oder eines mit dem Kondensator einer Wärmepumpe gekoppelten Heizkreises vorgeschaltet ist.

Der in Fig. 10 dargestellte Speicherbehälter (30) mit Pufferzone (31) weist einen Brauchwasserein- und einen Austritt (64), einen Brauchwassereintritt (65), zwei Prallscheiben (66) und einen Brauchwasseraustritt (67) auf, dessen damit verbundenes Tauchrohr (68) mit einem Verlängerungsstück (69) versehbar und alternativ auch bei (70) aus dem Behälter (30) herausgeführt werden kann.

Der Brauchwassereintritt (65) kann auch alternativ durch den Brauchwassereintritt (71) ersetzt werden. Außerdem ist der Behälter (30) mit einer Inspektions- und Reinigungsöffnung (72) versehen. Der besondere Vorteil dieses Behälters (30) beruht in seiner Kompaktheit gegenüber der zu Fig. 4 beschreibenen, getrennten Anordnung von Pufferbehälter (29) und Speicher (22). Auch hier wird das durch die Eintrittsöffnungen (65, 71) in den Behälter (30) gelangende, thermisch zu desinfizierende Warmwasser zunächst verzögert durch die Pufferzone (31) geleitet, bevor es entweder durch die Leitung (64) oder den Brauchwasseraustritt (67) bzw. (70) des Tauchrohres (68) entnommen werden kann.

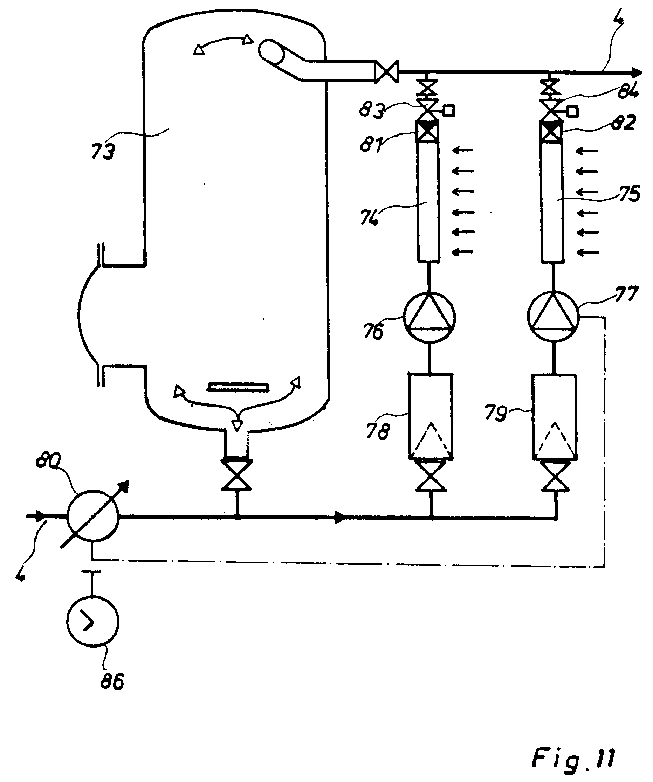

Um beispielsweise eine Brauchwasser-Erwärmungsanlage (1) gemäß den Figuren 1 bis 6 noch sicherer gestalten und die bereits im Kaltwasser vorhandenen Legionellen abtöten zu können, bevor sie in den Wassererwärmungs-Kreislauf (2) gelangen, ist die Anordnung gemäß Fig. 11 vorteilhaft. Dabei ist in der Kaltwasser-Zuleitung (4) ein Pufferbehälter (73) zur Übernahme desinfizierten Wassers bei Spitzenbedarf ebenso angeordnet wie eine UV-Strahlungsvorrichtung (74), die mit einer Förderpumpe (76) bei Zapfruhe einen geschlossenen Kreislauf in der Kaltwasser-Zuleitung (4) bilden. In Strömungsrichtung vor der Förderpumpe (76) ist ein Feinfilter (78) sowie ein Wassermengenmeßgerät (80) oder eine Zeitschaltuhr (86) zur Zuschaltung einer weiteren Förderpumpe (77) und einer weiteren UV-Strahlungsvorrichtung (75) mit Feinfilter (79) angeordnet. In Durchflußrichtung hinter den UV-Strahlungsvorrichtungen (74, 75) befindet sich jeweils ein Rückflußverhinderer (81, 82) sowie je ein Magnetventil (83, 84).

Es versteht sich, daß die vorbeschriebenen Anordnungen auch miteinander kombiniert und dadurch nicht nur die Legionella pneumophila, sondern auch andere Bakteriengruppen abgetötet werden können, wenn und soweit diese von den vorbeschriebenen Maßnahmen erfaßt werden.

### Bezugszeichenliste:

- Brauchwasser-Erwärmungsanlage: 1
- Brauchwasser-Erwärmungskreislauf: 2
- Brauchwasser-Verteilerkreis: 3
- Kaltwasser-Zuleitung: 4
- Vorwärmung des Kaltwassers: 5
- Desinfektionseinrichtung: 6
- Verbindungsleitung zwischen 2 und 3: 7
- Erwärmungseinrichtung des Brauchwassers: 8
- Brauchwasser-Verteilungsleitung: 9
- Rückkühler: 10
- Wasserleitungen in (2): 11, 15,
16, 17,
18, 24,
25, 28,
40, 41,
43, 45,
52, 53,
63
- Speicher: 12, 22
- Wassererwärmer: 13, 23
- Ladepumpe: 14, 60,
61, 62
- Zirkulationspumpe in (3): 19
- Nachwärmer in (3): 20
- Zapfstellen: 21
- Wärmemengenzuleitungen für (23, 13): 26
- Thermostat: 27
- Pufferbehälter: 29
- Behältereinheit: 30
- Pufferzone: 31
- zusätzlicher Wärmeübertrager: 32
- Zufuhrleitungen für Sekundärenergien: 33
- Ozon-Zufuhreinrichtung: 35
- Reaktionsbehälter: 36
- Aktivkohlefilter: 37, 44
- Treibwasserpumpe in (2): 38
- Bypassleitung in (2): 39
- Chlordosierungs-Einrichtung: 42, 50
- Chlordosierpumpe: 46, 47
- Zufuhrleitung: 47'
- Chlorüberschuß-Meßgerät: 46', 48
- Regelleitung: 49
- UV-Strahlungsvorrichtung: 51
- Heizschlangen in (23): 54, 55
- Eintritte von (23): 56, 57
- Austritte von (23): 58, 59
- Brauchwasseraustritt von (30): 64, 67, 70
- Brauchwassereintritt von (30): 64, 65, 71
- Prallscheibe: 66
- Tauchrohr: 68
- Verlängerungsstück: 69
- Reinigungsöffnung: 72
- Pufferbehälter: 73
- UV-Strahlungsvorrichtungen: 74, 75
- Förderpumpen: 76, 77
- Feinfilter: 78, 79
- Wassermengenmeßgerät: 80
- Rückflußverhinderer: 81, 82
- Magnetventil: 83, 84
- Enthärtungsvorrichtung: 85
- Zeitschaltuhr: 86

## Patentansprüche

1. Anlage zum Erwärmen von Brauchwasser und zum Abtöten von Legionellen in diesem Brauchwasser, bestehend aus einer Kaltwasser-Zuleitung, einem Wassererwärmer, einem Brauchwasser-Speicher, einer Zulaufleitung zu diesem und einer Brauchwasser-Verteilungsleitung mit Zapfstellen, **dadurch gekennzeichnet,** daß der Wassererwärmer (13, 23), der Brauchwasser-Speicher (12, 22) und eine Ladepumpe (14) bei Zapfruhe einen geschlossenen Wasserkreislauf (13, 23, 12, 22, 14) mit relativ hoher Desinfektionstemperatur bilden, wobei die Zulaufleitung (15, 25) des Brauchwasser-Speichers (12, 22) mit einem an sich bekannten Wärmeübertrager (10) als Rückkühler und dieser (10) wiederum über eine einzige Verbindungsleitung (18, 7) mit der Brauchwasser-Verteilungsleitung (9) verbunden ist sowie sämtliche zur Wassererwärmung erforderlichen Teile (12, 22; 13, 23; 15, 25; 14) thermisch von der Brauchwasser-Verteilungsleitung (9) mit ihren Zapfstellen (21) und eventuellen Zirkulationsleitungen getrennt sind.

2. Anlage nach Anspruch 1, **dadurch gekennzeichnet,** daß das Brauchwasser im Wasserkreislauf von Wassererwärmer (13, 23), Brauchwasser-Speicher (12, 22) und Ladepumpe (14) in zeitlicher und temperaturniveaumäßiger Abhängigkeit von der Absterbegeschwindigkeit der Legionella pneumophila umwälzbar ist, bevor es über den Rückkühler (10) in die Brauchwasser-Verteilungsleitung (9) förderbar ist.

3. Anlage nach Anspruch 1 oder 2, **dadurch gekennzeichnet,** daß der Rückkühler (10) von der Kaltwasser-Zuleitung (4) beaufschlagbar ist.

4. Anlage nach einem der Ansprüche 1 bis 3, **dadurch gekennzeichnet,** daß zwischen dem Wassererwärmer (23) und dem Brauchwasser-Speicher (22) ein die Desinfektionstemperatur im Speicher (22) über den erforderlichen Zeitraum für die Absterbegeschwindigkeit der Legionella pneumophila sicherstellernder Puffer (29, 31) angeordnet ist.

5. Anlage nach dem Anspruch 4, **dadurch gekennzeichnet,** daß der Puffer entweder als separater Behälter (29) oder als im Brauchwasser-Speicher (30) integrierte Pufferzone (31) ausgebildet ist.

6. Anlage nach einem der Ansprüche 1 bis 5, **dadurch gekennzeichnet,** daß der Brauchwasser-Erwärmer (13) und der Speicher (12) entweder in einem Behälter angeordnet oder als zwei räumlich getrennte Einheiten (23, 22) im Wasser-Erwärmungskreislauf (2) angeordnet sind.

7. Anlage nach einem der Ansprüche 1 bis 6, **dadurch gekennzeichnet,** daß zwischen dem Wassererwärmer (23) und der Ladepumpe (14) ein zusätzlicher Wärmeübertrager (32) zur Vorwärmung angeordnet ist, der von einer Leitung (33) eines Fernwärmenetzes, einer Heizungsanlage oder eines mit dem Kondensator einer Wärmepumpe gekoppelten Heizkreises beaufschlagbar ist.

8. Anlage nach einem der Ansprüche 1 bis 7, **dadurch gekennzeichnet,** daß zwischen dem Wassererwärmer (23) und der Ladepumpe (14) eine Enthärtungsvorrichtung (85) angeordnet ist.

9. Anlage nach einem der Ansprüche 1 bis 8, **dadurch gekennzeichnet,** daß der Wassererwärmer (23) mit mindestens zwei getrennten Heizschlangen (54, 55) versehen ist, die an ihrer Außenseite von demselben Heizmedium innerhalb des Wassererwärmers (23) beaufschlagbar sind.

10. Anlage nach Anspruch 9, **dadurch gekennzeichnet,** daß jeder Heizschlange (54, 55) entweder je eine getrennte (60, 61) oder beiden Heizschlangen (54, 55) eine gemeinsame Ladepumpe (62) zugeordnet ist.

11. Anlage zum Erwärmen von Brauchwasser und zum Abtöten von Legionellen in diesem Brauchwasser, bestehend aus einer Kaltwasser-Zuleitung, einem Wassererwärmer, einem Brauchwasser-Speicher, einer Zulaufleitung zu diesem und einer Brauchwasser-Verteilungsleitung mit Zapfstellen, **dadurch gekennzeichnet,** daß der Wassererwärmer (23), der Brauchwasser-Speicher (22) und eine Ladepumpe (14) bei Zapfruhe einen geschlossenen Wasserkreislauf für Brauchwasser bei Zapftemperatur bilden, wobei zwischen der Ladepumpe (14) und dem Wassererwärmer (23) ein Injektor einer Ozon-Zufuhreinrichtung (35), ein Reaktionsbehälter (36) und ein Aktivkohlefilter (37) hintereinander angeordnet sind und nur eine einzige Vorlaufleitung (18, 7) des Brauchwasser-Speichers (22) mit der Brauchwasser-Verteilungsleitung (9) verbunden ist.

12. Anlage nach Anspruch 11, **dadurch gekennzeichnet,** daß vor dem Injektor der Ozon-Zufuhreinrichtung (35) eine Treibwasserpumpe (38) und zwischen dieser (38) und der Ladepumpe (14) einerseits und dem Reaktionsbehälter (36) andererseits eine Bypassleitung (39) angeordnet sind.

13. Anlage zum Erwärmen von Brauchwasser und zum Abtöten von Legionellen in diesem Brauchwasser, bestehend aus einer Kaltwasser-Zuleitung, einem Wassererwärmer, einem Brauchwasser-Speicher, einer Zulaufleitung zu diesem und einer Brauchwasser-Verteilungsleitung mit Zapfstellen, **dadurch gekennzeichnet,** daß der Wassererwärmer (23), der Brauchwasser-Speicher (22) und eine Ladepumpe (14) bei Zapfruhe einen geschlossenen Wasserkreislauf (22, 25, 23, 45) für Brauchwasser bei Zapftemperatur bilden, wobei vor der Ladepumpe (14) eine Chlordosierungs-Einrichtung (42, 46), zwischen der Vorlaufleitung (43) des Brauchwasser-Speichers (22) und der Brauchwasser-Verteilungsleitung (9) ein Aktivkohlefilter (44) für die Dechlorierung angeordnet und die Brauchwasser-Verteilungsleitung (9) über nur eine einzige Verbindungsleitung (18, 7) mit dem geschlossenen Wasserkreislauf (22, 25, 23, 45) verbunden ist.

14. Anlage nach Anspruch 13, **dadurch gekennzeichnet,** daß in der Verbindungsleitung (25) zwischen dem Brauchwasserspeicher (22) und der Ladepumpe (14) ein Chlorüberschuß-Meßgerät (46') angeordnet ist, von welcher eine Chlordisierpumpe (46) regelbar ist.

15. Anlage nach einem der Ansprüche 1 bis 14, **dadurch gekennzeichnet,** daß zur Desinfektion des von der Brauchwasser-Verteilungsleitung (9), dem Zirkulationserwärmer (20), den Zapfstellen (21) und der Zirkulationspumpe (19) gebildeten Kreislaufes (9, 19, 20, 21) die Druckseite der Zirkulationspumpe (19) über eine Zufuhrleitung (47') mit einer Chlordosierpumpe (47) verbunden ist.

16. Anlage nach Anspruch 15, **dadurch gekennzeichnet,** daß in dem Zirkulationskreislauf (9, 19, 20, 21) ein die Chlordosierpumpe (47) regelndes Chlorüberschuß-Meßgerät (48) angeordnet ist.

17. Anlage nach einem der Anssprüche 1 bis 16, **dadurch gekennzeichnet,** daß die Ladepumpe (14) über einen in dem Wasserkreislauf angeordneten Thermostaten (27) ab- und einschaltbar ist.

18. Anlage zum Erwärmen von Brauchwasser und zum Abtöten von Legionellen in diesem Brauchwasser, bestehend aus einer Kaltwasser-Zuleitung, einem Wassererwärmer, einem Brauchwasser-Speicher, einer Zulaufleitung zu diesem und einer Brauchwasser-Verteilungsleitung mit Zapfstellen, **dadurch gekennzeichnet,** daß der Wassererwärmer (23), der Brauchwasser-Speicher (22) und eine Ladepumpe (14) bei Zapfruhe einen geschlossenen Wasserkreislauf (22, 25, 14, 23, 53) für Brauchwasser bei Zapftemperatur bilden, wobei auf der Druckseite der Ladepumpe (14) im Brauchwasser-Erwärmungskreislauf (2) eine UV-Strahlungsvorrrichtung (51) angeordnet und dieser Brauchwasser-Erwärmungskreislauf (2) über nur eine einzige Verbindungsleitung (18, 7) mit der Brauchwasser-Verteilungsleitung (9) verbunden ist.

19. Anlage nach dem Anspruch 1, **gekennzeichnet durch** eine Kombination der Merkmale der Ansprüche 2 bis 10 mit den Merkmalen der Ansprüche 11, 13 oder 18.

20. Anlage nach einem der Ansprüche 1 bis 19, **dadurch gekennzeichnet,** daß in der Kaltwasser-Zuleitung (4) eine UV-Strahlungsvorrichtung (51) zur Desinfektion angeordnet ist.

21. Anlage nach einem der Ansprüche 1 bis 20, **dadurch gekennzeichnet,** daß in der Kaltwasser-Zuleitung (4) ein Pufferbehälter (73) sowie mindestens eine UV-Strahlungsvorrichtung (74, 75) sowie mindestens eine Förderpumpe (76, 77) zu einem bei Zapfruhe geschlossenen Kreislauf (4, 73, 76, 77, 74, 75) verbunden sind.

22. Anlage nach Anspruch 21, **dadurch gekennzeichnet,** daß in Strömungsrichtung vor der Förderpumpe (76) ein Feinfilter (78) und vor dem Pufferbehälter (73) ein Wassermengen-Meßgerät (80) oder eine Zeitschaltuhr (86) zur Zuschaltung einer weiteren Förderpumpe (77) und einer weiteren UV-Strahlungsvorrichtung (75) mit Feinfilter (79) angeordnet sind.

23. Anlage nach Anspruch 21 oder 22, **dadurch gekennzeichnet,** daß in Durchflußrichtung hinter der UV-Strahlungsvorrichtung (74, 75) ein Rückflußverhinderer (81, 82) sowie ein Magnetventil (83, 84) in der Kaltwasser-Zuleitung (4) angeordnet sind.

24. Anlage nach einem der Ansprüche 1 bis 23, **dadurch gekennzeichnet,** daß die Brauchwasser-Verteilungsleitung (9) über einen Nachwärmer (20) mit den Zapfstellen (21) und diese (21) über eine Zwischenleitung mit einer Zirkulationspumpe (19) zum Nachwärmer (20) verbunden sind.

## Claims

1. An installation for the purpose of heating service-water and for the purpose of killing legionella in this service-water, consisting of a cold-water service line, a water heater, a service-water reservoir, a supply line to this reservoir and a service-water distributing line with tapping points, characterised in that when the taps are in the inoperative position the water heater (13, 23), the service-water reservoir (12, 22) and a supply pump (14) form a closed water circuit (13, 23, 12, 22, 14) having a relatively high disinfectant temperature, wherein the supply line (15, 25) of the service-water reservoir (12, 22) is connected to a heat exchanger (10) known per se as a feedback cooler and this heat exchanger (10) is in turn connected to the service-water distributing line (9) by means of a single connecting line (18, 7), as well as all the parts (12, 22; 13, 23; 15, 25; 14) required for heating the water being thermally separated from the service-water distributing line (9) with its tapping points (21) and possible circulation lines.

2. An installation according to claim 1, characterised in that the service-water in the water circuit of the water heater (13, 23), the service-water reservoir (12, 22) and the supply pump (14) can be circulated in dependence, with regard to time and temperature level measurement, upon the rate at which the legionella pneumophila die, before it can be conveyed by way of the feedback cooler (10) into the service-water distributing line (9).

3. An installation according to claim 1 or 2, characterised in that the feedback cooler (10) can be impinged upon by the cold water service line (4).

4. An installation according to any one of the claims 1 to 3, characterised in that between the water heater (23) and the service-water reservoir (22) a buffer (29, 31) is disposed which buffer assures the disinfection temperature in the reservoir (22) by means of the necessary period for the rate at which the legionella pneumophila die.

5. An installation according to claim 4, characterised in that the buffer is formed either as a separate container (29) or as a buffer zone (31) integrated in the service-water reservoir (30).

6. An installation according to any one of the claims 1 to 5, characterised in that the service-water heater (13) and the reservoir (12) are disposed either in a container or as two physically separate units (23, 22) in the water heating circuit (2).

7. An installation according to any one of the claims 1 to 6, characterised in that between the water heater (23) and the supply pump (14) an additional heat exchanger (32) for the purpose of an initial heating is disposed, which heat exchanger can be impinged upon by a line (33) of a long-distance energy grid, of a heating plant or of a heating circuit connected to the condenser of a heating pump.

8. An installation according to any one of the claims 1 to 7, characterised in that between the water heater (23) and the supply pump (14) a water-softening device (85) is disposed.

9. An installation according to any one of the claims 1 to 8, characterised in that the water heater (23) is provided with at least two separate heating coils (54, 55) which coils can be impinged upon on their outsides by the same heating medium that is inside the water heater (23).

10. An installation according to claim 9, characterised in that each heating coil (54, 55) is allocated either a separate supply pump (60, 61) or both heating coils (54, 55) are allocated a common supply pump (62).

11. An installation for the purpose of heating service-water and for the purpose of killing legionella in this service-water, consisting of a cold water service line, a water heater, a service-water reservoir, a supply line to this reservoir and a service-water distributing line with tapping points, characterised in that when the taps are in an inoperative position the water heater (23), the service-water reservoir (22) and a supply pump (14) form a closed water circuit for service-water at tap temperature, wherein between the supply pump (14) and the water heater (23) an injector of an ozone-supply device (35), a reaction container (36) and an activated carbon filter (37) are disposed one behind the other and only a single flow line (18, 7) of the service-water reservoir (22) is connected to the service-water distributing line (9).

12. An installation according to claim 11, characterised in that a water-forcing pump (38) is disposed in front of the injector of the ozone-supply device (35), and a by-pass line (39) is disposed between this pump (38) and the supply pump (14) on the one side and the reaction container (36) on the other side.

13. An installation for the purpose of heating service-water and for the purpose of killing legionella in this service-water, consisting of a cold water service line, a water heater, a service-water reservoir, a supply line to this reservoir and a service-water distributing line with tapping points, characterised in that when the taps are in an inoperative position the water heater (23), the service-water reservoir (22) and a supply pump (14) form a closed water circuit (22, 25, 23, 45) for service-water at tap temperature, wherein a chlorine metering device (42, 46) is disposed in front of the supply pump (14) and an activated carbon filter (44) for the dechlorination is disposed between the flow line (43) of the service-water reservoir (22) and the service-water distributing line (9), and the service-water distributing line (9) is connected by means of only a single connecting line (18, 7) with the closed water circuit (22, 25, 23, 45).

14. An installation according to claim 13, characterised in that in the connecting line (25) between the service-water reservoir (22) and the supply pump (14) a chlorine surplus measuring device (46') is disposed, by which measuring device the chlorinating pump (46) can be regulated.

15. An installation according to any one of claims 1 to 14, characterised by the fact that for the purpose of disinfection of the water circuit (9, 19, 20, 21), formed by the service-water distributing line (9) the circulation heater (20) the tapping points (21) and the circulation pump (19), the pressure side of the circulation pump (19) is connected by a supply line (47') to a chlorine metering pump (47).

16. An installation according to claim 15, characterised in that a chlorine surplus measuring device (48) regulating the chorine metering pump (47) is disposed in the circulation circuit (9, 19, 20, 21).

17. An installation according to claims 1 to 16, characterised in that the supply pump (14) can be switched off and on by means of a thermostat (27) disposed in the water circuit.

18. An installation for the purpose of heating service-water and for the purpose of killing legionella in this service-water, consisting of a cold water service line, a water heater, a service-water reservoir, a supply line to this reservoir and a service-water distributing line with tapping points, characterised in that when the taps are in an inoperative position the water heater (23), the service-water reservoir (22) and a supply pump (14) form a closed water circuit (22, 25, 14, 23, 53) for service-water at tap temperature, wherein on the pressure side of the supply pump (14) in the service-water heating circuit (2) a UV-radiation device (51) is disposed and this service-water heating circuit (2) is connected only by means of a single connecting line (18, 7) to the service-water distributing line (9).

19. An installation according to claim 1, characterised in a combination of the features of the claims 2 to 10 with the features of the claims 11, 13 or 18.

20. An installation according to any one of the claims 1 to 19, characterised in that a UV-radiation device (51) for the purpose of disinfection is disposed in the cold-water service line (4).

21. An installation according to any one of claims 1 to 20, characterised in that in the cold-water service line (4) a buffer container (73) as well as at least one UV-radiation device (74, 75), as well as at least one feed pump (76, 77) are connected to a circuit (4, 73, 76, 77, 74, 75) which is closed when the taps are in an inoperative position.

22. An installation according to claim 21, characterised in that in the direction of the flow a fine filter (78) is disposed in front of the feed pump (76) and a water-quantity measuring device (80) or an automatic time switch (86) is disposed in front of the buffer container (73) for the purpose of connecting a further feed pump (77) and a further UV-radiation device (75) to a fine filter (79).

23. An installation according to claims 21 or 22, characterised in that in the through-flow direction behind the UV-radiation device (74, 75) a non-return device (81, 82) as well as a solenoid valve (83, 84) are disposed in the cold-water service line (4)

24. An installation according to any one of the claims 1 to 23, characterised in that the service-water distributing line (9) is connected by means of a reheating device (20) to the tapping points (21) and these tapping points (21) are connected by means of a connecting line with a circulation pump (19) to the reheating device (20).

## Revendications

1. Installation pour le chauffage d'eau sanitaire et pour l'extermination de légionelles présentes dans cette eau sanitaire, constituée, par une conduite d'alimentation en eau froide, un chauffe-eau, un réservoir d'eau sanitaire, une conduite d'alimentation de celui-ci et une conduite de distribution d'eau sanitaire avec des points de distribution caractérisée
en ce que le chauffe-eau (13,23), le réservoir d'eau sanitaire (12,22) et une pompe d'alimentation (14) forment un circuit fermé (13,23,12,22,14) à température de désinfection relativement élevée en cas de non-distribution, la conduite d'alimentation (15,25) du réservoir d'eau sanitaire (12,22) étant reliée à un dispositif de transfert thermique (10) connu en soi servant de refroidisseur de retour et celui-ci (10) étant à son tour relié par une seule conduite de liaison (18,7) à la conduite de distribution d'eau sanitaire (9), et toutes les parties (12,22;13,23;15,25;14) nécessaires au chauffage de l'eau étant isolées thermiquement de la conduite de distribution d'eau sanitaire (9) munie des points de distribution (21) et éventuellement de conduites de circulation.

2. Installation selon la revendication 1 caractérisée en ce que l'eau sanitaire est circulée dans le circuit constitué par le chauffe-eau (13,23), le réservoir d'eau sanitaire (12,22) et la pompe d'alimentation (14) pendant une période de temps et à un niveau de température, fonctions de la vitesse d'extermination des légionelles pneumophiles, avant d'être alimentée par le refroidisseur de retour (10) dans la conduite de distribution d'eau sanitaire (9).

3. Installation selon la revendication 1 ou 2 caractérisée en ce que le refroidisseur de retour (10) est alimenté par la conduite d'alimentation d'eau froide (4).

4. Installation selon l'une des revendications 1 à 3 caractérisée en ce qu'un tampon (29,31) est agencé entre le chauffe-eau (23) et le réservoir d'eau sanitaire (22), qui maintient la température de désinfection dans le réservoir (22) pendant la période de temps nécessaire pour la vitesse d'extermination des légionelles pneumophiles.

5. Installation selon la revendication 4 caractérisée en ce que le tampon consiste en un réservoir séparé (29) ou en une zone tampon (31) intégrée dans le réservoir d'eau sanitaire (30).

6. Installation selon l'une des revendications 1 à 5 caractérisée en ce que le chauffe-eau (13) et le réservoir (12) sont agencés dans un seul conteneur ou consistent en deux unités (23,22) séparées dans l'espace, agencées dans le circuit de chauffage de l'eau (2).

7. Installation selon l'une des revendications 1 à 6 caractérisée en ce qu'un dispositif de transfert de chaleur intermédiaire (32) est agencé entre le chauffe-eau (23) et la pompe d'alimentation (14) pour le préchauffage, le dispositif de transfert de chaleur intermédiaire étant alimenté par une conduite (33) d'un réseau de chauffage publique, d'une installation de chauffage ou d'un circuit de chauffage raccordé au condenseur d'une pompe à chaleur.

8. Installation selon l'une des revendications 1 à 7 caractérisée en ce qu'un dispositif adoussisseur (85) est agencé entre le chauffe-eau (23) et la pompe d'alimentation (14).

9. Installation selon l'une des revendications 1 à 8 caractérisée en ce que le chauffe-eau (23) est équipé d'au moins deux serpentins de chauffage séparés (54,55) qui sont alimentés de l'extérieur par le même fluide de chauffage que celui qui se trouve à l'intérieur du chauffe-eau (23).

10. Installation selon la revendication 9 caractérisée en ce qu'une pompe d'alimentation individuelle (60,61) est associée à chaque serpentin de chauffage (54,55) ou en ce qu'une pompe d'alimentation commune (62) est associée aux deux serpentins de chauffage (54,55).

11. Installation pour le chauffage d'eau sanitaire et pour l'extermination de légionelles présentes dans cette eau sanitaire, constituée par une conduite d'alimentation d'eau froide, un chauffe-eau, un réservoir d'eau sanitaire, une conduite d'alimentation de celui-ci et une conduite de distribution d'eau sanitaire avec des points de distribution, caractérisée en ce que le chauffe-eau (23), le réservoir d'eau sanitaire (22) et une pompe d'alimentation (14) forment un circuit fermé d'eau sanitaire à température de distribution en cas de non-distribution, un injecteur d'un dispositif d'injection d'ozone (35), un récipient de réaction (26) et un filtre à charbon actif (37) étant agencés l'un derrière l'autre entre la pompe d'alimentation (14) et le chauffe-eau (23), et une seule conduite d'amenée (18,7) au réservoir d'eau sanitaire (22) étant reliée à la conduite de distribution d'eau sanitaire (9).

12. Installation selon la revendication 11 caractérisée en ce qu'une pompe d'eau refoulante est agencée en amont de l'injecteur du dispositif d'injection d'ozone (35), et, en ce qu'une conduite de dérivation (39) est agencée entre ladite pompe refoulante (38) et la pompe d'alimentation (14), d'une part, et le récipient de réaction (36), d'autre part.

13. Installation pour le chauffage d'eau sanitaire et pour l'extermination de légionelles présentes dans cette eau sanitaire constituée par une conduite d'alimentation en eau froide, un chauffe-eau, un réservoir d'eau sanitaire, une conduite d'alimentation de celui-ci et une conduite de distribution d'eau sanitaire avec des points de distribution caractérisée en ce que le chauffe-eau (23), le réservoir d'eau sanitaire (22) et une pompe d'alimentation (14) forment un circuit fermé d'eau sanitaire à température de distribution en cas de non - distribution, un dispositif de dosage de chlore (42,46) étant agencé en amont de la pompe d'alimentation (14), un filtre de charbon actif pour le déchlorage étant agencé, entre la conduite d'amenée (43) du réservoir d'eau sanitaire (22) et la conduite de distribution d'eau sanitaire (9), et la conduite de distribution d'eau sanitaire (9) n'étant reliée au circuit fermé (22,25,23,45) que par une seule conduite de liaison (18,7).

14. Installation selon la revendication 13 caractérisée en ce qu'un dispositif de mesure de l'excès de chlore (46') qui règle une pompe de dosage du chlore (46) est agencé dans la conduite de liaison (25), entre le réservoir d'eau sanitaire (22) et la pompe d'alimentation (14).

15. Installation selon l'une des revendications 1 à 14 caractérisée en ce que le côté sous pression de la pompe de circulation (19) est relié par une conduite d'alimentation (47') à une pompe de dosage du chlore (47), en vue de la désinfection du circuit (9,19,20,21) formé par la conduite de distribution d'eau sanitaire (9), le réchauffeur de circulation (20), les points de distribution (21) et la pompe de circulation (19).

16. Installation selon la revendication 15 caractérisée en ce qu'un dispositif de mesure de l'excès du chlore (48) qui règle la pompe de dosage du chlore (47) est agencé dans le circuit de circulation (9,19,20,21).

17. Installation selon l'une des revendications 1 à 16 caractérisée en ce que la pompe d'alimentation (14) est enclenchable ou arrêtable par l'intermédiaire d'un thermostat (27) agencé dans le circuit d'eau.

18. Installation pour le chauffage d'eau sanitaire et pour l'extermination de légionelles présentes dans cette eau sanitaire, constituée par une conduite d'alimentation en eau froide, un chauffe-eau, un réservoir d'eau sanitaire, une conduite d'alimentation de celui-ci et une conduite de distribution d'eau sanitaire avec des points de distribution caractérisée en ce que le chauffe-eau (23), le réservoir d'eau sanitaire (22) et une pompe d'alimentation (14) forment un circuit fermé (22,25,14,23,53) pour l'eau sanitaire, à température de distribution, en cas de non-distribution, un dispositif à rayonnement UV (51) étant agencé dans le circuit de chauffage d'eau sanitaire (2) du côté sous pression de la pompe d'alimentation (14) et en ce que ce circuit de chauffage de l'eau sanitaire (2) n'est relié à la conduite de distribution d'eau sanitaire (9) que par une seule conduite de liaison (18,7).

19. Installation selon la revendication 1 caractérisée par une combinaison des caractéristiques des revendications 7 à 10 avec celles des revendications 11,13 et 18.

20. Installation selon l'une des revendications 1 à 19 caractérisée en ce qu'un dispositif à rayonnement UV (51) est agencé dans la conduite d'alimentation d'eau froide (4) pour la désinfection.

21. Installation selon l'une des revendications 1 à 20 caractérisée en ce que, dans la conduite d'alimentation d'eau froide (4), un réservoir tampon (73) ainsi qu'au moins un dispositif à rayonnement UV (74,75) et au moins une pompe de circulation (76,77) sont reliés de manière à former un circuit fermé (4,73,76,77,74,75) en cas de non-distribution.

22. Installation selon la revendication 21 caractérisée en ce qu'un filtre fin (78) est agencé en amont de la pompe de circulation (76), vu dans le sens de circulation, et en ce qu'un dispositif de mesure du débit d'eau (80) ou bien une minuterie (86) est agencée en amont du réservoir tampon (73), vu dans le sens de circulation, pour l'enclenchement d'une pompe de circulation supplémentaire (77) et d'un dispositif à rayonnement UV supplémentaire (75) avec filtre fin (79).

23. Installation selon la revendication 21 ou 22 caractérisée en ce qu'un organe anti-retour (81,82) ainsi qu'une vanne magnétique (83,84) sont agencés dans la conduite d'alimentation d'eau froide (4), en aval du dispositif à rayonnement UV (74,75), vu dans le sens de circulation.

24. Installation selon l'une des revendications 1 à 23 caractérisée en ce que la conduite de distribution d'eau sanitaire (9) est reliée par un dispositif de postchauffage (20) aux points de distribution (21) et en ce que ceux-ci (21) sont reliés par une conduite intermédiaire avec une pompe de circulation (19) au dispositif de postchauffage (20).
